# EUROPEAN PATENT SPECIFICATION

(11) **EP 2 189 070 B1**
(45) Date of publication and mention of the grant of the patent: **11.07.2012**
(21) Application number: 09175566.0
(22) Date of filing: 10.11.2009
(51) Int. Cl.: A23N 7/00, A23N 12/00, A23N 15/00

(54) **Leek peeling machine**
Lauchschälmaschine
Machine pour peler des poireaux

(30) Priority: 19.11.2008 ES 200803296
(43) Date of publication of application: 26.05.2010
(73) Proprietor: Asist, S.L., 31192 Mutilva Alta, Navarra (ES)
(72) Inventor: Suijkerbuijk García, Adriano, 31192, MUTILVA ALTA (NAVARRA) (ES)
(74) Representative: Bérogin, Francis

(56) References cited:
- DE-A1-102004 013 178
- FR-A- 737 369
- FR-A1- 2 663 206
- GB-A- 2 435 608

## Description

### Field of the Invention

The present invention relates to the automatic devices used for cleaning vegetables, proposing a device which is specifically in charge of automatically cleaning leeks, thereby improving processing times, reducing costs and improving the production.

### Background of the Invention

In current practice, leeks are generally harvested manually, so that, once harvested, the leeks are placed in boxes in which they are transported.

The leeks arrive at the storage site impregnated with soil and different substances from the cultivation fields, therefore they must pass through a cleaning process to be able to be packaged for their marketing and consumption.

The traditional means of cleaning leeks are based on manual techniques, which involve a high labor cost, as well as a delay in the productive efficiency, and even entail a risk for the operator because they must work with cutting utensils.

These facts have led to the development of cleaning devices which automate the leek cleaning process, but the solutions developed in this sense do not satisfactorily solve the problem.

A leek cleaning device is known from e.g. FR-2663206.

### Object of the Invention

The present invention proposes a peeling machine which allows automatically cleaning leeks, carrying out by means of a simple process the steps necessary for getting the leeks ready for their subsequent handling, reducing time and labor.

This machine object of the invention consists of a group of mechanisms placed on a frame supporting the entire functional assembly.

The machine is preceded by a leek feeder to be processed, the functional assembly of the machine comprising a thrusting system to introduce the leeks in the cleaning process, a cutting system to produce longitudinal cuts in the outer surface layer of the leeks, a peeling system to eliminate the dirty outer skin of the leeks and an extracting system for drawing the clean leeks from the machine.

The leek feeder comprises a conveyor belt provided with housings to transversely transport the leeks individually, passing through a head which cuts the leeks at the ends to eliminate the leaves and the roots, after which the leeks are individually deposited in the machine, in which each leek is transported by the thrusting system towards the cutting area, in which it passes between rolls provided with knives which make a cut in the outer layer of the leek. Then the leek passes through the peeling system, in which groups of rolls remove the outer layer of the leek, which once cleaned is drawn out of the machine by the extracting system by means of parallel drive belts.

This machine therefore automatically peels the leeks which are processed, eliminating the dirty outer layer thereof, whereby the leeks are perfectly clean, without needing to wash with water, which is a cost saving and environmentally friendly.

A machine which is very simple in its implementation and operation is thus obtained, whereby an effective automatically operated process for cleaning leeks is however achieved, improving the conditions for performing this operation.

### Description of the Drawings

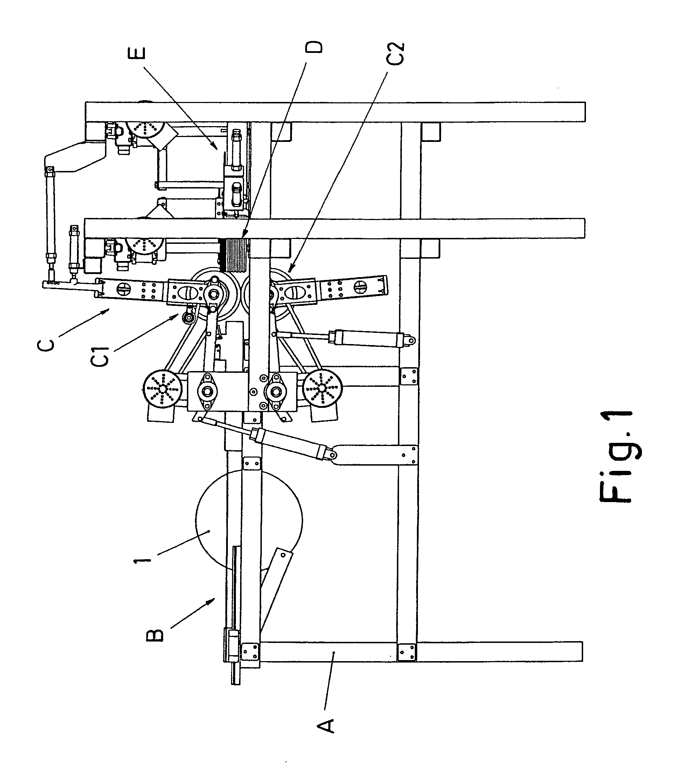

Figure 1 shows a side view of the machine object of the invention, without the feeder.

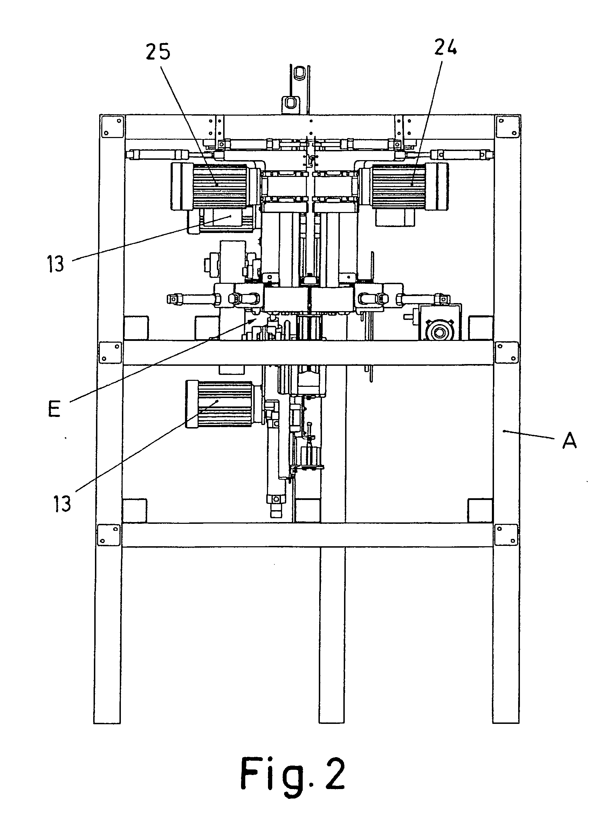

Figure 2 shows an elevational view of the rear part of the machine, without the feeder.
Figure 3 shows a side view of the functional assembly of the machine without the support frame.
Figure 4 shows a plan view of said functional assembly of the machine.
Figure 5 shows an enlarged side view of the thrusting system of the leeks for thrusting towards the cleaning process.
Figure 6 shows a plan view with respect to the previous figure.

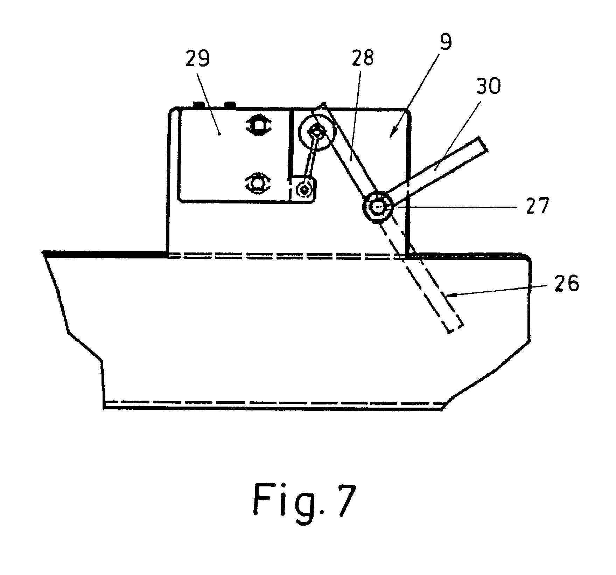

Figure 7 shows a side view of an enlarged detail of the leek diameter gauging system.

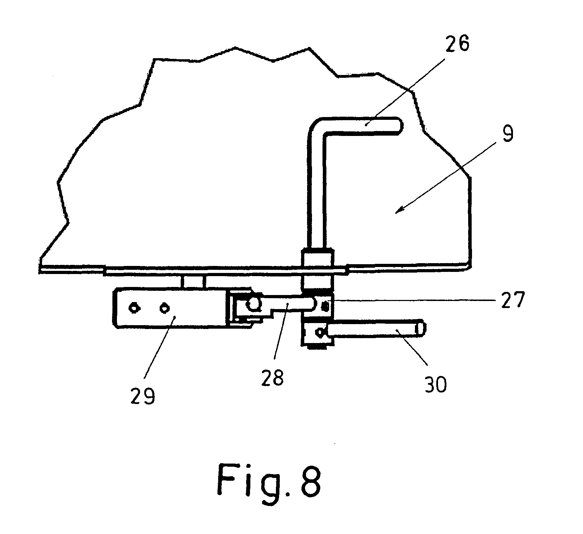

Figure 8 shows a plan view with respect to the previous figure.
Figure 9 shows a side view of the upper group of the leek cutting system.
Figure 10 shows a front view of said upper group of the leek cutting system.

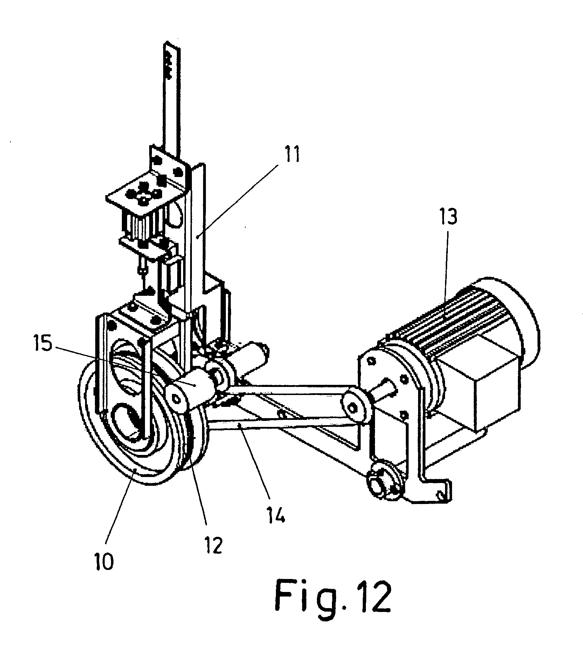

Figures 11 and 12 show two perspective views of this upper group of the cutting system, observed from the front and from the back, respectively.
Figure 13 shows a bottom plan view of one of the groups forming the leek peeling system.
Figure 14 shows a perspective view of said peeling group of the previous figure.
Figure 15 shows a perspective view of the assembly of the proposed machine with the feeder for introducing leeks.
Figure 16 shows a perspective view of the assembly of the machine with the feeder, from the other observation point.

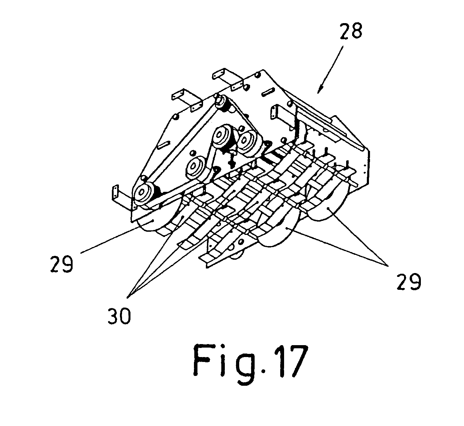

Figure 17 shows a perspective view of the cutting head for cutting the ends of the leeks observed from the bottom part.

### Detailed Description of the Invention

The object of the present invention relates to a leek peeling machine, with an embodiment which allows obtaining the leeks perfectly prepared for subsequent treatments at the outlet of the machine.

The proposed machine is provided with a frame (A), on which there is a functional assembly comprising a thrusting system (B) for transporting the leeks forward, a cutting system (C) for cutting the outer surface layer of the leeks, a peeling system (D) for removing the outer layer of the leeks and an extracting system (E) for drawing the clean leeks from the machine, this functional assembly being preceded by a feeder (F) which deposits in the thrusting system (B) the leeks to be processed.

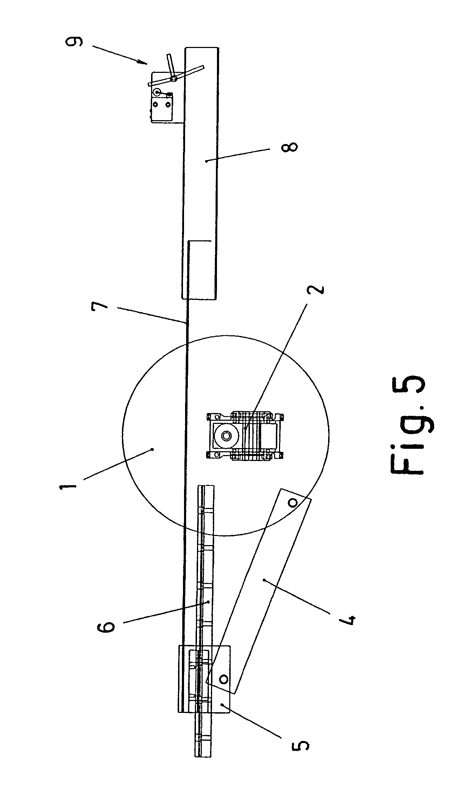

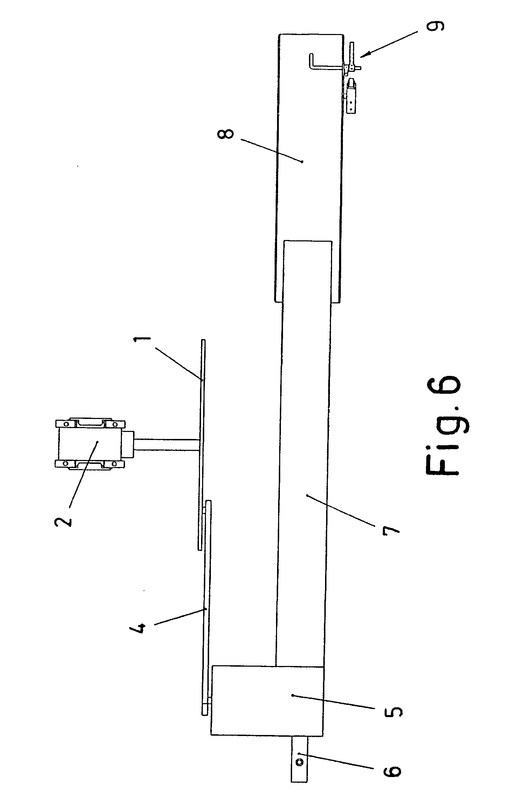

The thrusting system (B) (Figures 5 and 6) consists of a flywheel (1) which is actuated through a transmission (2) by a drive shaft (3), a connecting rod (4) being connected to said flywheel (1), which connecting rod (4) is connected at its end to a block (5) which is slidably assembled on a guide (6), a thrust arm (7) being integral with regard to same, the free end of which thrust arm (7) passes through a channel (8) in which there is arranged a gauge (9).

The cutting system (C) consists of two similar groups (C1 and C2), one above and other below the passage of the leeks in the course through the machine, each of them comprising a roll (10) which is floatably supported by a structure (11), there being arranged axially with said roll (10) a circular knife (12) which is inserted therein with rotational independence and a certain radial freedom, said knife being rotatably actuated by a motor (13) through a transmission (14).

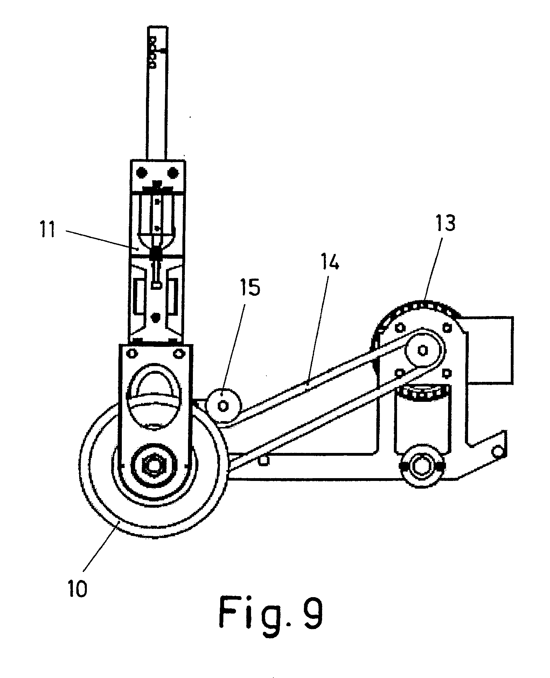

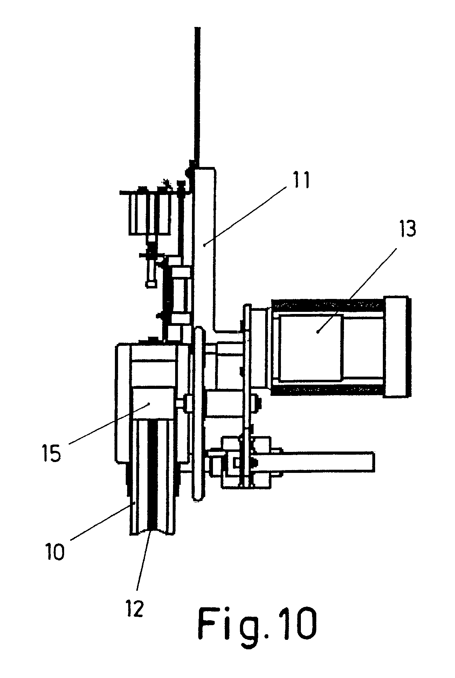

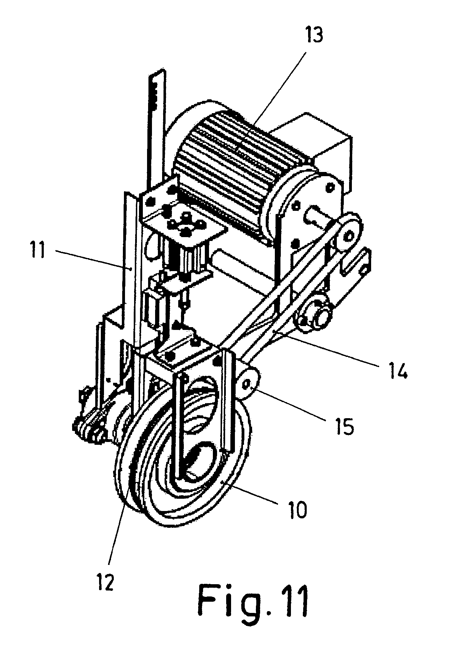

In the upper group (C1), which is depicted in Figures 9 to 11, an auxiliary roll (15) is supported on the roll (10) which bears the knife (12), which auxiliary roll (15) is actuated by the actual transmission (14) actuating the knife (12), so that said auxiliary roll (15) transmits a rotating movement to the roll (10) by the same drive provided by the motor (13) for the rotation of the knife (12).

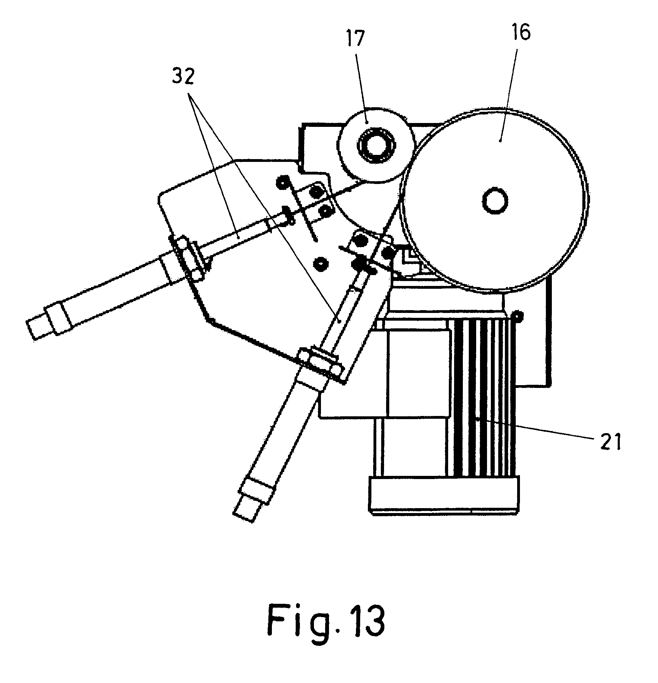

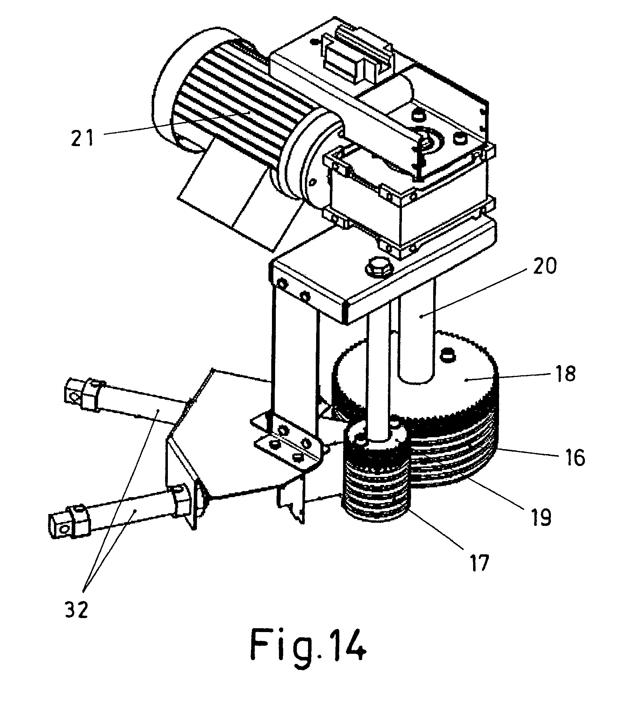

The peeling system (D) in turn comprises two similar groups (D1 and D2), one on one side and the other on the other side of the passage of the leeks in the course through the machine, each of them comprising (Figures 13 and 14) an assembly of two tangential rolls (16 and 17) with a rough surface and which are rotatably associated to one another by means of corresponding pinions (18 and 19), one of which is associated with the shaft (20) of a rotating drive motor (21).

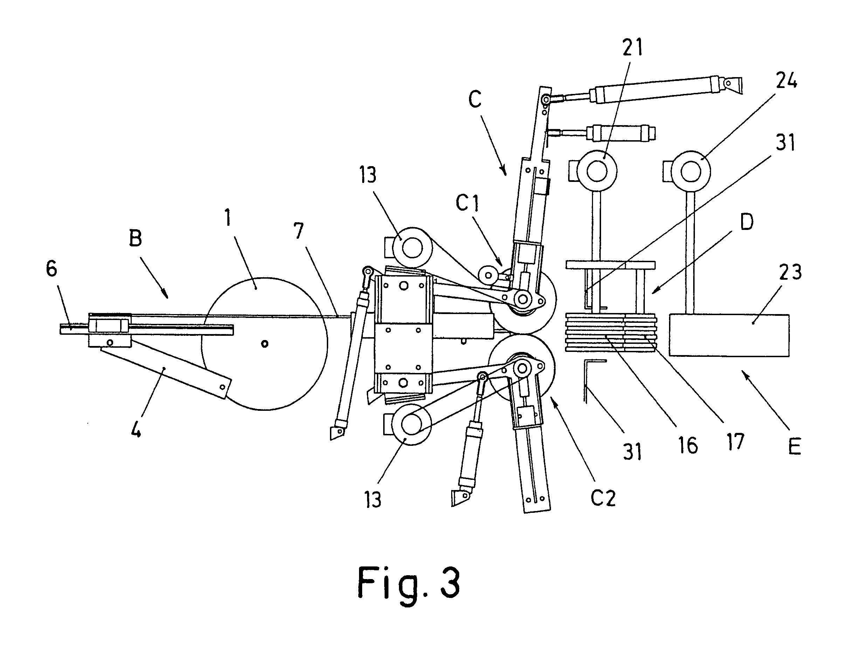

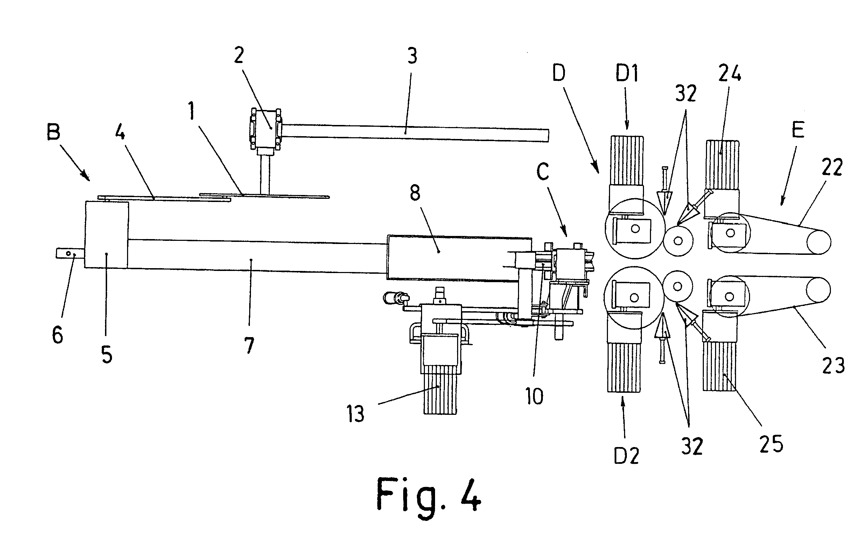

As seen in Figures 3 and 4, the extracting system (E) consists of two parallel drive belts (22 and 23), which are driven in opposite directions by respective synchronous motors (24 and 25).

The leeks to be processed are deposited in the machine individually by means of the feeder (F), which places the leek in the channel (8) of the thrusting system (B), from where the thrust arm (7) moves it to the cutting system (C).

In this phase for thrusting the leek towards the cutting system (C), the diameter gauge (9) controls the diameter of the leek to determine the positioning of the groups (C1 and C2) of the cutting system (C) depending on the diameter of each leek.

The gauge (9) has for such purpose a feeler (26) which rotates a shaft (27) in which there is incorporated an arm (28) acting on a microregulator (29), so that according to the drive which the latter receives, the positioning of the groups (C1 and C2) of the cutting group (C) acts. Said gauge (9) furthermore has a lever (30) which, connected to a spring (not depicted), allows the return of the assembly of the gauge (9) to the initial position with the speed necessary for the control of the next leek.

When the leek which is processed passes between the groups (C1 and C2) of the cutting system (C), the support of the rolls (10) of said groups on the leek makes these rolls (10) slightly separate, whereby the corresponding knives (12) emerge in the opposite inner part thereof, so that as the leek driven by the rotation of the mentioned rolls (10) passes through, the knives (12) produce in said leek a longitudinal cut in the outer layer thereof.

A continuous control of the diameter along the length of each leek is established by means of the gauge (9), determining as a function thereof a variable separation positioning between the groups (C1 and C2) of the cutting system (C), so that the incision of the cuts on the leek is constant along the entire length thereof.

After the cutting system (C), the leek passes through the groups (D1 and D2) of the peeling system (D), so that the two half skins of the leek resulting as a consequence of the cuts produced by the cutting system (C) are caught by the sets of the rolls (16 and 17) of said groups (D1 and D2), removing these half skins from the leek containing dirt, whereby the leek is clean, exiting between the belts (22 and 23) of the cutting system (E) outside the machine.

The function of the groups (D1 and D2) of the peeling system (D) is complemented with blowers (31) which cause the separation of the half skins of the leek, so that said half skins are caught by the sets of the rolls (16 and 17), thus assuring the removal thereof.

In relation to the mentioned rolls (16 and 17) removing the skins of the leek, there are arranged scrapers (32) which eliminate the soil and skins which may remain stuck in said rolls (16 and 17) as the dirty skin removed from the leek passes between them, these rolls (16 and 17) thus being kept clean so that the machine can perform the consecutive leek cleaning process without any problems.

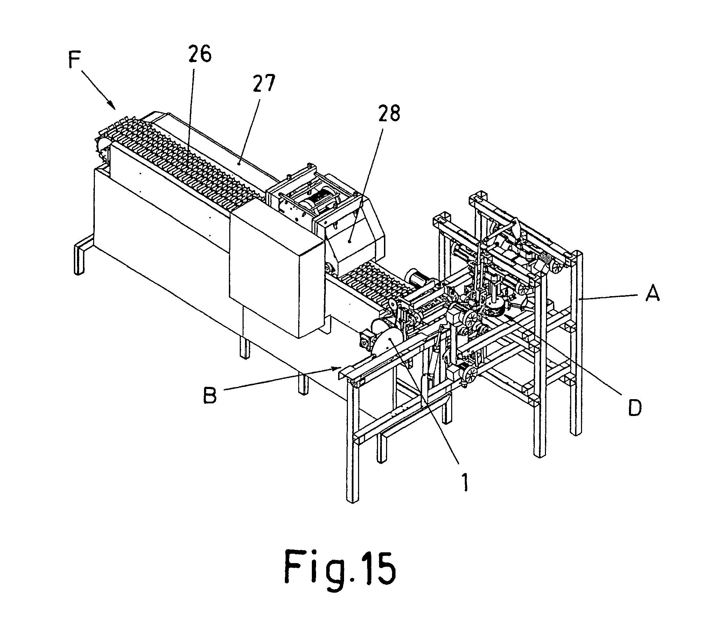

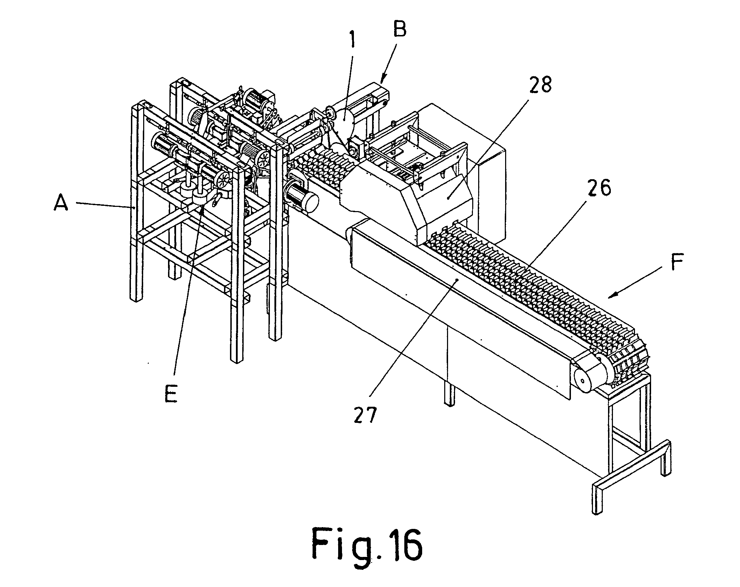

For the process described, the leeks are deposited individually by the feeder (F) in the thrusting system (B), said feeder (F), as observed in Figures 15 and 16, comprising a conveyor belt (26) provided with a series of transverse housings to place the leeks therein, which leeks in this placement have the leaves on a side belt (27) which helps to keep the leeks in the placement position on the conveyor belt (26).

Said conveyor belt (26) passes below a head (28) which has sets of knives (29) relative to the sides of the mentioned conveyor belt (26) and pressing elements (30) located thereon, so that when the leeks pass through this head (28), the knives (29) cut the ends of each leek, separating the part of the leaves and the part of the roots, after which the leeks are transported, without these excess parts, to the thrusting system (B) for introducing them in the operational cleaning process in the machine.

The conveyor belt (26) of the feeder (F) is actuated by a drive system, by means of which the drive shaft (3) of the thrusting system (B) is likewise actuated, whereby achieving synchronism between the feed and the introduction of the leeks in the operational process of the machine, the flywheel (1) minimizing the inertias and possible blows due to the operation.

## Claims

1. A leek peeling machine, intended for automatically eliminating the outer layer of leeks containing dirt, which consists of a functional assembly consisting of a thrusting system (B) to transport the leeks towards the inside of the machine, a cutting system (C) which produces longitudinal cuts in the outer layer of the leeks, a peeling system (D) which removes the outer layer of the leeks, and an extracting system (E) which draws the clean leeks from the machine, this entire assembly preceded by a feeder (F) which individually deposits the leeks in the thrusting system (B), **characterized in that** the cutting system (C) comprises two similar cutting groups (C1 and C2) one arranged above and the other below the passage of the leeks in the course along the machine, each of which groups (C1 and C2) has a dancer roll (10), in which a circular knife (12) is embedded with rotational independence and a certain radial freedom with respect to the roll (10), whereas the peeling system (D) comprises two opposing similar groups (D1 and D2) one located on one side and the other on the other side of the passage of the leeks in the course by the machine, each of which groups (D1 and D2) consists of an assembly of two tangential rolls (16 and 17) with a rough surface, which are associated in synchronized rotation relative to a drive motor (21).

2. The leek peeling machine according to claim 1, **characterized in that** the thrusting system (B) consists of a flywheel (1) actuated synchronously with the operation of the cutting system (C), a connecting rod (4) which drives a thrust arm (7) longitudinally moving through a conduction channel (8) for the leeks towards the cutting system (C) being connected to said flywheel (1).

3. The leek peeling machine according to claim 1, **characterized in that** rolls (10) of the groups (C1 and C2) of the cutting system (C) are arranged in an assembly allowing selectively varying the separation thereof depending on the diameter of the leeks to be processed.

4. The leek peeling machine according to claims 2 and 3, **characterized in that** in the channel (8) of the thrusting system (B) there is arranged a diameter gauge (9) which controls the diameter of each leek, to determine, depending on said diameter, the separation positioning of rolls (10) of the cutting system (C).

5. The leek peeling machine according to claim 1, **characterized in that** there are arranged in the peeling system (D) blowers (31) which cause the separation of the cut parts of the outer layer of the leeks so that they can be removed by the sets of rolls (16 and 17).

6. The leek peeling machine according to claim 1, **characterized in that** the extracting system (E) consists of two parallel straps (22 and 23), which are actuated synchronously in opposite directions to actuate the drive of the leeks between them towards the outside of the machine.

7. The leek peeling machine according to claim 1, **characterized in that** the feeder (F) consists of a conveyor belt (26) provided with transverse housings to place the leeks therein, said conveyor belt passing below a head (28) which has sets of knives (29) relative to the sides, by means of which the ends of the leeks are cut, separating the part of the leaves and the part of the roots therefrom.

## Patentansprüche

1. Lauchschälmaschine, die zum automatischen Entfernen der verschmutzten äußeren Schicht von Lauchstangen bestimmt ist und die aus einer Funktionsbaugruppe besteht, die aus einem Schiebesystem (B) besteht, um die Lauchstangen ins Innere der Maschine zu befördern, einem Schneidesystem (C), das in der äußeren Schicht der Lauchstangen Längsschnitte produziert, einem Schälsystem (D), das die äußere Schicht der Lauchstangen entfernt, und einem Extraktionssystem (E), das die sauberen Lauchstangen aus der Maschine zieht, wobei dieser ganzen Baugruppe eine Beschickungseinrichtung (F) vorgeschaltet ist, welche die Lauchstangen einzeln in dem Schiebesystem (B) ablegt, **dadurch gekennzeichnet, dass** das Schneidesystem (C) zwei ähnliche Schneidgruppen (C1 und C2) umfasst, wobei eine Schneidgruppe unter dem Kanal und die andere Schneidgruppe über dem Kanal der Lauchstangen auf dem Weg entlang der Maschine angeordnet sind, wobei jede dieser Gruppen (C1 und C2) eine Tänzerwalze (10) aufweist, in die ein unabhängig und mit einer gewissen radialen Freiheit in Bezug auf die Walze drehbares kreisrundes Messer (12) eingebettet ist, während das Schälsystem (D) zwei einander gegenüberliegende ähnliche Gruppen (D1 und D2) umfasst, von denen eine sich auf der einen Seite und die andere sich auf der anderen Seite des Kanals der Lauchstangen auf dem Weg entlang der Maschine befindet, wobei jede der Gruppen (D1 und D2) aus einer Baugruppe von zwei tangentialen Walzen (16 und 17) mit einer rauen Oberfläche besteht, die in einer synchronisierten Drehung relativ zu einem Antriebsmotor (21) verbunden sind.

2. Lauchschälmaschine nach Anspruch 1, **dadurch gekennzeichnet, dass** das Schiebesystem (B) aus einem synchron zum Betrieb des Schneidesystems (C) betätigten Schwungrad (1) besteht, wobei eine Verbindungsstange (4), die einen sich in Längsrichtung durch einen Führungskanal (8) für die Lauchstangen in Richtung zu dem Schneidesystem (C) bewegenden Schiebearm (7) antreibt, mit dem Schwungrad (1) verbunden ist.

3. Lauchschälmaschine nach Anspruch 1, **dadurch gekennzeichnet, dass** Walzen (10) der Gruppen (C1 und C2) des Schneidesystems (C) in einer Baugruppe angeordnet sind, die eine gezielte Veränderung des Abstands derselben in Abhängigkeit vom Durchmesser der zu verarbeitenden Lauchstangen erlaubt.

4. Lauchschälmaschine nach Anspruch 2 und 3, **dadurch gekennzeichnet, dass** im Kanal (8) des Schiebesystems (B) ein Durchmesser-Messgerät (9) angeordnet ist, das den Durchmesser jeder Lauchstange kontrolliert, um in Abhängigkeit von dem Durchmesser den Abstand zu bestimmen, in dem die Walzen (10) des Schneidesystems (C) positioniert werden.

5. Lauchschälmaschine nach Anspruch 1, **dadurch gekennzeichnet, dass** in dem Schälsystem (D) Gebläse (31) angeordnet sind, die die Trennung der geschnittenen Teile der äußeren Schicht der Lauchstangen bewirkt, so dass sie durch die Sätze von Walzen (16 und 17) entfernt werden können.

6. Lauchschälmaschine nach Anspruch 1, **dadurch gekennzeichnet, dass** das Extraktionssystem (E) aus zwei parallelen Bügeln (22 und 23) besteht, die synchron in entgegengesetzte Richtungen betätigt werden, um den Antrieb der Lauchstangen zwischen ihnen in Richtung zur Außenseite der Maschine zu bewirken.

7. Lauchschälmaschine nach Anspruch 1, **dadurch gekennzeichnet, dass** die Beschickungseinrichtung (F) aus einem Förderband (26) besteht, das mit quer verlaufenden Gehäusen versehen ist, in denen die Lauchstangen angeordnet werden, wobei das Förderband unter einem Kopf (28) hindurchläuft, der Sätze von Messern (29) relativ zu den Seiten aufweist, mit deren Hilfe die Enden der Lauchstangen geschnitten werden, so dass der Teil mit den Blättern und der Teil mit den Wurzeln davon abgetrennt werden.

## Revendications

1. Machine à éplucher les poireaux, destinée à éliminer automatiquement la couche extérieure de poireaux contenant de la terre, qui est constituée d'un ensemble fonctionnel constitué d'un système de poussée (B) pour transporter les poireaux vers l'intérieur de la machine, d'un système de coupe (C) qui produit des coupes longitudinales dans la couche extérieure des poireaux, d'un système à éplucher (D) qui retire la couche extérieure des poireaux, et d'un système d'extraction (E) qui tire les poireaux propres à partir de la machine, cet ensemble entier étant précédé par un dispositif d'alimentation (F) qui dépose individuellement les poireaux dans le système de poussée (B), **caractérisée en ce que** le système de coupe (C) comprend deux groupes de coupe similaires (C1 et C2), l'un agencé au-dessus et l'autre en dessous du passage des poireaux dans le parcours le long de la machine, chacun de ces groupes (C1 et C2) possède un rouleau fou (10), dans lequel un couteau circulaire (12) est encastré avec une liberté de rotation et une certaine liberté radiale par rapport au rouleau (10), alors que le système à éplucher (D) comprend deux groupes similaires opposés (D1 et D2) l'un positionné sur un côté et l'autre sur l'autre côté du passage des poireaux dans le parcours dans la machine, chacun de ces groupes (D1 et D2) est constitué d'un ensemble de deux rouleaux tangentiels (16 et 17) avec une surface rugueuse, qui sont associés en rotation synchronisée par rapport à un moteur d'entraînement (21).

2. Machine à éplucher les poireaux selon la revendication 1, **caractérisée en ce que** le système de poussée (B) est constitué d'un volant (1) actionné de façon synchrone avec le fonctionnement du système de coupe (C), une bielle (4) qui entraîne un bras de poussée (7) se déplaçant longitudinalement à travers un canal de conduction (8) pour les poireaux vers le système de coupe (C) étant reliée audit volant (1).

3. Machine à éplucher les poireaux selon la revendication 1, **caractérisée en ce que** des rouleaux (10) des groupes (C1 et C2) du système de coupe (C) sont agencés dans un ensemble permettant de varier sélectivement la séparation de ceux-ci suivant le diamètre des poireaux destinés à être traités.

4. Machine à éplucher les poireaux selon les revendications 2 et 3, **caractérisée en ce que**, dans le canal (8) du système de poussée (B), est agencée une jauge de diamètre (9) qui contrôle le diamètre de chaque poireau, pour déterminer, suivant ledit diamètre, le positionnement de séparation des rouleaux (10) du système de coupe (C).

5. Machine à éplucher les poireaux selon la revendication 1, **caractérisée en ce que**, dans le système à éplucher (D), sont agencés des soufflantes (31) qui entraînent la séparation des parties coupées de la couche extérieure des poireaux pour qu'elles puissent être ôtées par les jeux de rouleaux (16 et 17).

6. Machine à éplucher les poireaux selon la revendication 1, **caractérisée en ce que** le système d'extraction (E) est constitué de deux sangles parallèles (22 et 23), qui sont actionnées de façon synchrone dans des directions opposées pour actionner l'entraînement des poireaux entre elles vers l'extérieur de la machine.

7. Machine à éplucher les poireaux selon la revendication 1, **caractérisée en ce que** le dispositif d'alimentation (F) est constitué d'une courroie transporteuse (26) pourvue de logements transversaux pour positionner les poireaux dans ceux-ci, ladite courroie transporteuse passant en dessous d'une tête (28) qui comporte des jeux de couteaux (29) par rapport aux côtés, au moyen desquels les extrémités des poireaux sont coupés, séparant la partie des feuilles et la partie des racines de ceux-ci.
